# EUROPEAN PATENT APPLICATION

(11) **EP 3 940 551 A1**
(43) Date of publication of application: **19.01.2022**
(21) Application number: 20904238.1
(22) Date of filing: 30.11.2020
(51) Int. Cl.: G06F 16/29

(54) **METHOD AND APPARATUS FOR GENERATING WEATHER FORECAST VIDEO, ELECTRONIC DEVICE, AND STORAGE MEDIUM**

(30) Priority: 05.06.2020 CN 202010507379
(71) Applicant: Baidu Online Network Technology (Beijing) Co., Ltd, Beijing 100085 (CN)
(72) Inventor: CHANG, Yibiao, Beijing 100085 (CN)
(74) Representative: Zimmermann, Tankred Klaus
(86) International application number: PCT/CN2020/132822
(87) International publication number: WO 2021/243985

(57) **Abstract**

The present disclosure provides a method and apparatus of generating a weather forecast video, an electronic device, and a storage medium, which relates to a field of intelligent recommendation by artificial intelligence. A specific implementation solution includes: acquiring weather forecast information for a geographic region; mining a video style; and generating the weather forecast video by using a weather forecast video generation model trained based on a deep learning, based on the weather forecast information and the video style. By generating the weather forecast video using the technical solution, a weather forecast may be presented in video, so that a form of the weather forecast on a network platform is enriched, and a flexibility of a presentation mode for presenting the weather forecast is improved. In addition, weather forecast videos in various video styles may be generated based on the weather forecast information and the video style, which meets needs of users with various video style preferences, so that user experience is improved, and user stickiness is enhanced.

## Description

### CROSS REFERENCE TO RELATED APPLICATION(S)

This application claims priority to Chinese patent Application No. CN202010507379.0 entitled "METHOD AND APPARATUS OF GENERATING WEATHER FORECAST VIDEO, ELECTRONIC DEVICE, AND STORAGE MEDIUM", filed on June 5, 2020, the content of which are incorporated herein by reference in their entirety.

### TECHNICAL FIELD

The present disclosure relates to a field of computer technology, especially a field of intelligent recommendation by artificial intelligence, and in particular to a method and apparatus of generating a weather forecast video, an electronic device, and a storage medium.

### BACKGROUND

Weather forecast has always been information that users are very concerned about. Based on the information of weather forecast, users may effectively plan future itineraries.

With a development of mobile Internet, young users usually acquire weather forecast information from the Internet through mobile terminals. Existing online weather forecast information is usually presented in graphics and text, and a presentation mode is very rigid.

### SUMMARY

In order to solve the technical problems described above, the present disclosure provides a method and apparatus of generating a weather forecast video, an electronic device, and a storage medium.

According to a first aspect, there is provided a method of generating a weather forecast video, including: acquiring weather forecast information for a geographic region; mining a video style; and generating the weather forecast video based on the weather forecast information and the video style.

According to a second aspect, there is provided an apparatus of generating a weather forecast video, including: a weather information acquisition module configured to acquire weather forecast information for a geographic region; a mining module configured to mine a video style; and a generation module configured to generate the weather forecast video based on the weather forecast information and the video style.

According to a third aspect, there is provided an electronic device, including: at least one processor; and a memory communicatively connected to the at least one processor, wherein the memory stores instructions executable by the at least one processor, and the instructions, when executed by the at least one processor, cause the at least one processor to implement the method described above.

According to a fourth aspect, there is provided a non-transitory computer-readable storage medium having computer instructions stored thereon, wherein the computer instructions allow a computer to implement the method described above.

By generating the weather forecast video using the technical solution, a weather forecast may be presented in video, so that a form of the weather forecast on a network platform is enriched, and a flexibility of a presentation mode for presenting the weather forecast is improved. In addition, weather forecast videos in various video styles may be generated based on the weather forecast information and the video style, which meets needs of users with various video style preferences, so that user experience is improved, and user stickiness is enhanced.

It should be understood that content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution and do not constitute a limitation to the present disclosure.
FIG. 1 shows a schematic diagram according to a first embodiment of the present disclosure.
FIG. 2 shows a schematic diagram according to a second embodiment of the present disclosure.
FIG. 3 shows a schematic diagram according to a third embodiment of the present disclosure.
FIG. 4 shows a schematic diagram according to a fourth embodiment of the present disclosure.
FIG. 5 shows a schematic diagram according to a fifth embodiment of the present disclosure.
FIG. 6 shows a block diagram of an electronic device for implementing a method of generating a weather forecast video according to the embodiments of the present disclosure.

### DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

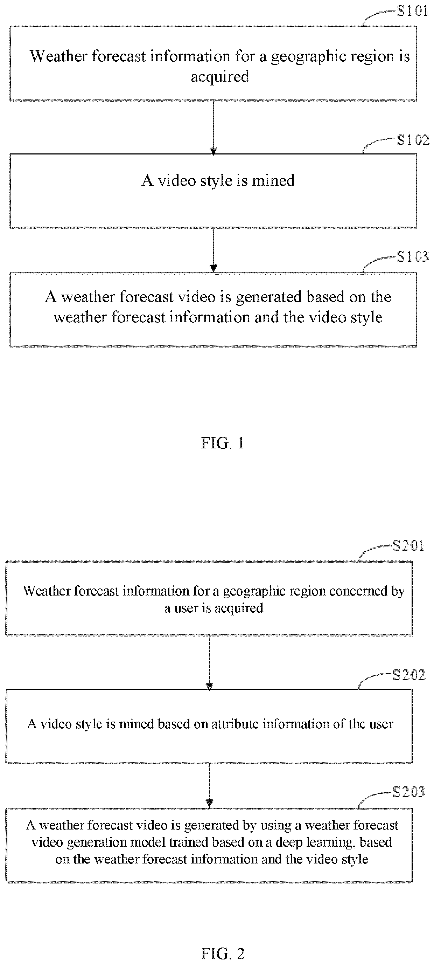

FIG. 1 shows a schematic diagram according to a first embodiment of the present disclosure. As shown in FIG. 1, this embodiment provides a method of generating a weather forecast video, which may specifically include following steps.

In step S101, weather forecast information for a geographic region is acquired.

In step S102, a video style is mined.

In step S103, the weather forecast video is generated based on the weather forecast information and the video style.

An execution subject of the method of generating the weather forecast video in this embodiment is an apparatus of generating the weather forecast video, which may be an electronic device or may be an application integrated with software.

The method of generating the weather forecast video of this embodiment may be applied to a network platform, the weather forecast information for any geographic region may be acquired, and any video style may be mined. Then, the weather forecast video for the geographic region is generated based on the weather forecast information and the video style. For example, for any geographic region, if a plurality of video styles may be mined, it is possible to generate a weather forecast video based on each video style and the weather forecast information for the geographic region. For the same geographic region, a plurality of weather forecast videos corresponding to a plurality of video styles may be generated to meet needs of users with different video style preferences.

The weather forecast information in this embodiment is main content information of the weather forecast video. The video style, as a parameter to generate the weather forecast video, is used to present the content of the weather forecast information in a certain form so as to improve user experience and meet personalized needs of users. For example, video styles may be divided based on various dimensions of information, for example, into a traditional style, a humorous style, a lovely style, a costume drama style, or into a youth style, a middle-aged style, an elderly style, and so on, which will not be described here in detail. For each video style, information for this style may be carried in the weather forecast video. For example, in the weather forecast video in the traditional style, the weather forecast may be broadcast in a traditional way similar to news broadcast. In the weather forecast video in the humorous style, the weather forecast may be broadcast with humorous chair words and intonation. Other video styles are similar and will not be described here in detail.

In this embodiment, when the weather forecast video is generated based on the weather forecast information and the video style, various video production tools may be used, which is not limited here.

In the method of generating the weather forecast information in this embodiment, the weather forecast information for the geographic region is acquired, the video style is mined, and the weather forecast video is generated based on the weather forecast information and the video style. Compared with the related art, the weather forecast may be presented in video, so that a form of the weather forecast in the network is enriched, and a flexibility of a presentation mode for presenting the weather forecast is improved. In addition, according to the technical solution of this embodiment, weather forecast videos in various video styles may be generated based on the weather forecast information and the video style, which meets the needs of users with various video style preferences, so that user experience is improved, and user stickiness is enhanced.

FIG. 2 shows a schematic diagram according to a second embodiment of the present disclosure. On the basis of the embodiment shown in FIG. 1, the embodiment shown in FIG. 2 provides a method of generating a user-oriented weather forecast video, which may specifically include following steps.

In step S201, weather forecast information for a geographic region concerned by a user is acquired.

In step S202, the video style is mined based on attribute information of the user.

In step S203, the weather forecast video is generated by using a weather forecast video generation model trained based on a deep learning, based on the weather forecast information and the video style.

Different from the embodiment shown in FIG. 1, the embodiment shown in FIG. 2 is to generate a weather forecast video that a certain user is interested in.

It should be noted that in this embodiment, the geographic region concerned by the user may be a geographic region obtained by positioning a mobile terminal of the user. Alternatively, the technical solution of this embodiment may also be initiated by the user. The user may input or select the geographic region on an interface through the mobile terminal, and request the weather forecast video for the geographic region. Alternatively, the geographic region concerned by the user may be obtained by analyzing activity areas of the user. Alternatively, the geographic region concerned by the user may be mined according to user's behavior log on web pages within a preset time range before the user initiates the request for the weather forecast video. For example, when the user always browses various information about a city A on a travel website, and then clicks the request for the weather forecast video, it is considered that the user wants to view the weather forecast video for the city A at this time. Certainly, in practical application, the geographic region concerned by the user may be known in other ways, which will not be described here in detail.

No matter how the geographic region concerned by the user is known, the weather forecast information for the geographic region may be obtained after the geographic region is known. For example, the weather forecast information for the geographic region may be obtained by visiting various official weather forecast websites. Optionally, the weather forecast information in this embodiment may contain at least one of a highest temperature, a lowest temperature, a wind force, whether the weather is sunny or rainy or snowy, a level and an approximate time of rain or snow if any, whether there is haze, a weather quality index, a UV index, etc. in each of next one or two days or even consecutive N days.

In this embodiment, the video styles that the user may like may also be mined based on the attribute information of the user. Different users may like different video styles. For example, some users may like the weather forecast video in the traditional style that is broadcast by TV stations. Young users may need the weather forecast video in line with their personalized style, such as the humorous video style or the lovely video style. Some users may like a dialect version of video or other video styles. In this embodiment, the video style that may interest the user most may be mined based on the attribute information of the user.

In this embodiment, when the weather forecast video is generated, the weather forecast information and the video style obtained may be used as materials for generating the weather forecast video and may be input to a pre-trained weather forecast video generation model. The corresponding weather forecast video is generated and output by using the weather forecast video generation model, which may ensure that the video style is a favorite style for the user, thereby improving a user's interest in the weather forecast video.

The weather forecast video generation model in this embodiment may be trained based on deep learning with a large amount of training data in various video styles, so that weather forecast videos in various video styles may be generated.

For example, for the humorous video style, a large amount of training data may be collected. Each training data contains weather forecast information, a humorous style identifier, and an artificially generated weather forecast video in the humorous style. During training, the weather forecast information and the humorous style identifier in the each training data are input into the weather forecast video generation model, and the weather forecast video in the corresponding style is generated by using the weather forecast video generation model. Then it is comprehensively compared whether a language style, a text, a tone, a speed of speaking, etc. of the weather forecast video generated by the weather forecast video generation model are consistent with those of the artificially generated weather forecast video. If not, parameters of the weather forecast video generation model are adjusted so that the weather forecast video generated by the weather forecast video generation model tends to be consistent with the artificially generated weather forecast video. In this way, the weather forecast video generation model may learn the style of the artificially generated weather forecast video. When being trained with a lot of training data, the weather forecast video generation model may learn the generation of the weather forecast video in this video style. The text used herein mainly refers to the chair words matching the video style, other than the weather information. The chair words are used to string the weather information together so that the weather forecast video is more vivid.

The weather forecast video generation model may also learn the generation of the weather forecast video in other video styles by a similar training method based on the deep learning.

In the method of generating the weather forecast video in this embodiment, by generating the weather forecast video using the technical solution described above, the weather forecast may be presented in video, so that the form of the weather forecast in the network is enriched, and the flexibility of the presentation mode for presenting the weather forecast is improved. Moreover, because the video style is mined based on the attribute information of the user, it is possible to mine the video style that may interest the user. Further, the weather forecast video generated by using the weather forecast video generation model based on the weather forecast information and the video style may interest the user and meet the personalized needs of the user, so that the user experience is improved, and the user stickiness is enhanced.

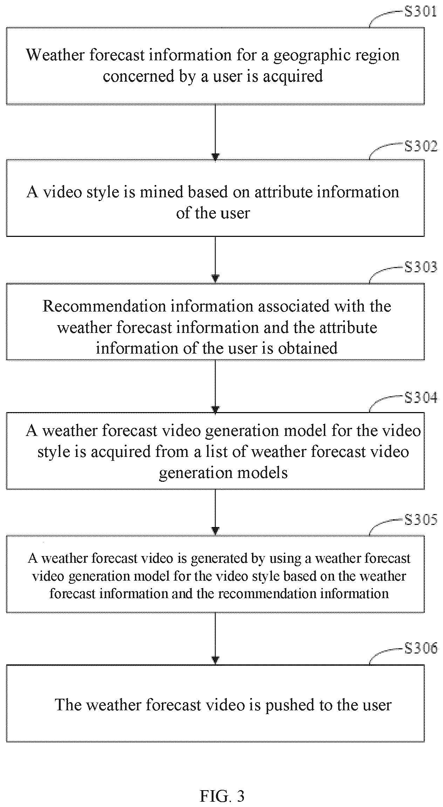

FIG. 3 shows a schematic diagram according to a third embodiment of the present disclosure. The technical solution of the present disclosure is described in more detail in the embodiment shown in FIG. 3 on the basis of the embodiment shown in FIG. 2. As shown in FIG. 3, this embodiment provides a method of generating a weather forecast video, which may specifically include following steps.

In step S301, the weather forecast information for the geographic region concerned by the user is acquired.

In step S302, the video style is mined based on attribute information of the user.

The steps S301 and S302 in this embodiment are the same as the steps S201 and S202 in the embodiment shown in FIG. 2, and reference may be made to the description in the embodiment shown in FIG. 1.

Furthermore, in this embodiment, the step S302 may specifically include any of following implementations.

(1) The video style is acquired based on the attribute information of the user.

In this implementation, the user may clearly mark a favorite video style in the attribute information. For example, a selectable label for video style may be provided in a personal center, and the user may choose a label for the favorite video style. As a label or parameter, the video style may be identified by a number, letter or a combination of symbols.

(2) The video style may be mined based on identity information of the user.

In this implementation, the video style in line with the identity information of the user may be mined. For example, if the user is a journalist, it is considered that the user prefers to the traditional video style without any special modification. Accordingly, it may be defined in the video style that the weather forecast video generated only contains the most basic weather forecast information. If the user is a very young user who likes two dimensions, it may be considered that the user likes the video style of animation. Accordingly, it may be defined in the video style that the weather forecast video generated contains some cartoon animation images and some scenes in animation. If the user is a student, it may be considered that the most acceptable style is a style of teacher's lecture. Accordingly, it may be defined in the video style that the weather forecast video generated contains a character that imitates a teacher, and a teaching scene may be used. Certainly, in practical applications, the identity information of the user may include other types, and the favorite video style may be mined accordingly so as to generate a favorite weather forecast video for the user.

The identity information of the user in this embodiment may be obtained based on a career selected by the user in the personal center. If the user does not select the career, a possible career of the user may be inferred based on historical access data of the user.

(3) The video style may be mined based on age information of the user.

In this implementation, the age information of the user may be divided into a plurality of levels, and most basically may be divided into three levels, including young people, middle-aged people and old people. For young people, it may be considered that young people prefer a brisk video style. Accordingly, it may be defined in the video style that the weather forecast video contains elements that young people like, such as words that young people like. Moreover, young people are full of vigor, and the speed of speaking for the weather forecast video generated may be slightly accelerated, which is more in line with young people's way of thinking. For middle-aged people, the video style may be set as the traditional video style without any special modification, similar to that for the journalist described above. In this video style, a normal speed of speaking may be adopted. For old people, it may be considered that the old people are slow to respond due to physical deterioration. Accordingly, it may be defined in the video style that a gentle and more accessible language is used in the weather forecast video generated, buzzwords should be avoided, and a speed of speaking should be slow. Certainly, in practical applications, the age information may be divided into more levels according to specific needs, and each level may be configured with a corresponding video style.

In addition, the age information of the user in this embodiment may be obtained from user's basic information in the user's personal center. If the user does not provide his age information, the age information of the user may also be inferred based on historical access data of the user.

(4) The video style may be mined based on interest information of the user.

In this embodiment, the video style that may interest the user may be mined based on the interest information of the user. For example, for a user who likes ball games, it may be defined in the video style that the weather forecast is broadcast in the tone of a game commentator. For a user who likes to watch fashion shows, it may be defined in the video style that the weather forecast is broadcast in the form of a fashion show. For a user who likes music, it may be defined in the video style that the weather forecast is broadcast by a singer. That is, in this embodiment, it may be defined in the video style corresponding to the interest information of the user that the weather forecast is broadcast in a favorite scene for the user or by a favorite idol for the user.

In this embodiment, when registering on a network platform, the user usually leaves interest information. If the user does not choose, the interest information of the user may be inferred based on the historical access data of the user.

(5) The video style may be mined based on a subject matter of a film and television play concerned by the user in a latest preset time period.

For example, if the user has been watching costume drama in the last month, the video style may be set to a costume drama style. Accordingly, it may be defined in the video style that the weather forecast is broadcast in a costume drama scene. For example, for a female user, words such as "highness, it's very cold today" may be used to bring the user into the scene. Similarly, a spy drama style, an urban emotional drama style, a rural drama style and so on may also be mined according to the movie and television play concerned by the user.

It should be noted that features of each video style are pre-configured, and the corresponding weather forecast generation model has been trained to generate the weather forecast video in the each video style.

Optionally, in practical application, more video styles may be pre-set according to the actual situation, so that the corresponding video styles may be mined based on the attribute information of the user. Examples are not described here in detail.

In addition, in practical application, the implementations described above may be used as a variety of selectable mining rules which may be configured with priority respectively. When mining the video style, the rules may be applied in the order of high priority to low priority. If a rule with high priority is not available, a rule with lower priority may be applied, until the corresponding video style is mined successfully. In summary, the video style mined by using the above various implementations may be more in line with the needs of the user, so that the weather forecast video generated based on the video style may meet the personalized needs of the user and interest the user more.

In step S303, recommendation information associated the weather forecast information and the attribute information of the user is obtained.

For example, the associated recommendation information in this embodiment may contain travel prompt information and/or dress advice information, etc. The travel prompt information may contain a prompt to reduce going out in a case of a high temperature, a prompt to avoid going to mountain areas in a case of mudslides, a prompt to close windows and turn on air purifier in a case of serious haze, a prompt to keep sun protection when going out in a case of a strong UV light, and so on. The dress advice information may contain a suggestion of adding or removing clothes in time according to temperature and weather conditions, and so on.

In addition, it should be noted that in this embodiment, the associated recommendation information is obtained based on the attribute information of the user, so that the recommendation information is obtained in a targeted manner, and the accuracy of the recommendation information is ensured. For example, based on the attribute information of the user, the recommendation information obtained for a user with a car may contain whether it is recommended to wash the car or not, and the recommendation information obtained for a user without a car may not contain the relevant information. For a user who like excursion, a prompt may be made when there is a risk of mudslides, and for a user who never goes to the suburbs, the associated recommendation information may not be obtained. Moreover, for old people, the corresponding recommendation information may contain "keep warm while walking", for middle-aged people, the corresponding recommendation information may contain "go home early after work", and for young people, the corresponding recommendation information may contain "prevent colds after sweating during exercise". In summary, by using the manner in this embodiment, the recommendation information associated with the weather forecast information and the attribute information of the user may be obtained.

Optionally, the method may include, prior to the step S303: (a) collecting a plurality of attribute information of the user, a plurality of weather forecast information and a plurality of associated recommendation information, from historical log data; and (b) establishing a correspondence relationship of the plurality of attribute information of the user, the plurality of weather forecast information and the plurality of associated recommendation information, and storing the correspondence relationship in an information table.

In this case, the step S303 may specifically include acquiring travel prompt information and/or dress advice information from a pre-established information table based on the weather forecast information and the attribute information of the user. The pre-established information table contains the attribute information of the user, the weather forecast information and the associated recommendation information.

Specifically, the information of users may be collected from the historical log data. The information of users may include the attribute information of users, the travel prompt information and dress advice information of users in weathers corresponding to various weather forecast information. After a statistic of all information of users, an information table containing the correspondence relationship between the attribute information of users, the weather forecast information and the associated recommendation information may be established. By using the information table, the recommendation information associated with the weather forecast information and the attribute information of the user may be obtained conveniently. Moreover, the information in the correspondence relationship are all collected from real historical log data, thereby ensuring the accuracy of the associated recommendation information, such as the travel prompt information and/or the dress advice information.

Specifically, there is no limit to the sequence of execution of the steps S303 and the above steps S301 and S302.

In step S304, the weather forecast video generation model corresponding to the video style is obtained from a list of weather forecast video generation models.

In step S305, the weather forecast video is generated by using the weather forecast video generation model corresponding to the video style, based on the weather forecast information and the recommendation information.

In this embodiment, the weather forecast information and the recommendation information are used together as the materials for generating the weather forecast video, so that the content of the weather forecast video may be enriched to contain the travel prompt information and/or the dress advice information, etc.

The steps S304 to S305 in this embodiment are different from the step S203 in the preceding embodiment. The step S203 is executed by using a weather forecast video generation model compatible with a plurality of video styles. However, in this embodiment, a plurality of weather forecast video generation models in various video styles, instead of a weather forecast video generation model compatible with a plurality of video styles, are pre-trained based on the deep learning. In this manner, the weather forecast video generation model for each video style only focus on one video style, so that the accuracy and quality of the weather forecast video generated may be improved. For the training process of the weather forecast video generation model for each video style based on the deep learning, reference may be made to the relevant description in the embodiment shown in FIG. 2, which will not be repeated here. Optionally, in this embodiment, the weather forecast video may also be generated by using a weather forecast video generation model compatible with a plurality of video styles. In this case, the weather forecast video may be generated by using the weather forecast video generation model trained based on the deep learning, directly based on the weather forecast information, the recommendation information and the video style. Similarly, the weather forecast video generation model also needs to be trained based on the deep learning with training data of a variety of video styles.

The weather forecast video generation models for various video styles in this embodiment may use different video templates, and different scenes may be used for different styles. Moreover, in some video styles, the weather forecast information may be broadcast by humans or animals. If the weather forecast video is generated by using this type of weather forecast generation model, it is necessary to ensure that a shape of a mouth when the human or animal is speaking is consistent with the broadcast text, so that the user experience is improved. In addition, optionally, by using the weather forecast generation model in this embodiment, the weather forecast video with different themes may be generated. For example, the theme may include characteristic buildings of a city, such as the Palace Museum, the Summer Palace and the Great Wall for Beijing. Each theme may correspond to one or more pictures as a background of the video. For each theme, the weather forecast video may be generated under the background of the corresponding theme. The user may choose different themes for different weather, so as to obtain, for example, the weather forecast video of snow in the Palace Museum, the weather forecast video of rain in the Summer Palace, and so on. Optionally, in this case, the weather forecast video may be generated by using the weather forecast video generation model trained based on the deep learning, based on the weather forecast information, the video style and the theme. For example, prior to the step S305, the theme of the video selected by the user may also be acquired. Then, the weather forecast video is generated by using the weather forecast video generation model corresponding to the video style, based on the weather forecast information, the recommendation information, and at least one picture corresponding to the theme. Accordingly, the background of the weather forecast video in the video style is the picture in the theme. In this way, the presentation mode for presenting the weather forecast video is enriched, the appearance is beautified, and the personalized needs of the user are satisfied.

In step S306, the weather forecast video is pushed to the user.

According to the solution in this embodiment, the weather forecast video for the user may be actively pushed to the user after it is generated in the manner described above. For example, the weather forecast video of interest to the user may be generated by a network platform using the technical solution described above, and pushed to the user at a fixed time every day, such as a fixed time in the evening, so that the user may make a corresponding travel plan in advance based on the weather forecast video. Moreover, the mode of actively pushing the weather forecast video to the user in this embodiment is very convenient for the user. The user does not need to search graphic information of weather forecast on the network, but only needs to click the push information, so that the user experience is good.

In the method of generating the weather forecast video in this embodiment, by using the technical solution described above, the recommendation information associated with the weather forecast information and the attribute information of the user may be obtained, the weather forecast information and the recommendation information together may be taken as the materials for generating the video, the weather forecast video is generated by using the weather forecast generation model corresponding to the video style of interest to the user, and the weather forecast video generated is pushed to the user. In this embodiment, both the presentation mode for presenting the weather forecast information and the content of the weather forecast information are enriched, and the information in the weather forecast video generated is more targeted to be in line with user taste, so that the personalized needs of the user are satisfied, and the user stickiness is improved.

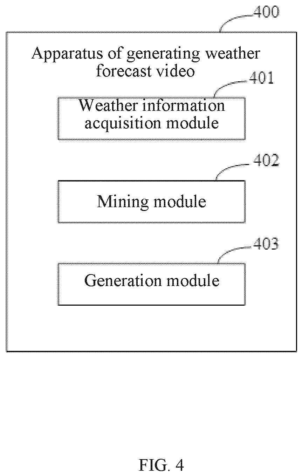

FIG. 4 shows a schematic diagram according to a fourth embodiment of the present disclosure. As shown in FIG. 4, this embodiment provides an apparatus 400 of generating a weather forecast video, including: a weather information acquisition module 401 configured to acquire weather forecast information for a geographic region; a mining module 402 configured to mine a video style; and a generation module 403 configured to generate the weather forecast video based on the weather forecast information and the video style.

An implementation principle and a technical effect of the apparatus 400 of generating the weather forecast video in this embodiment are the same as those in the related method embodiments, which will not be repeated here.

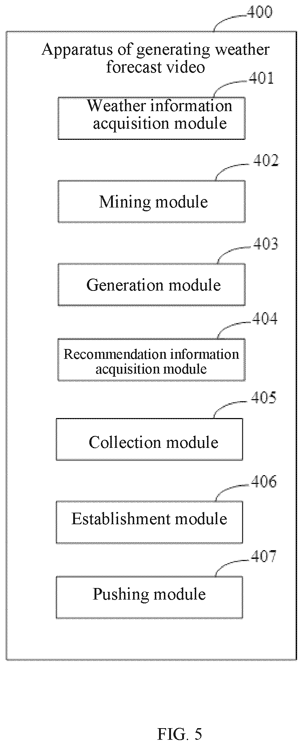

FIG. 5 shows a schematic diagram according to a fifth embodiment of the present disclosure. The technical solution of the present disclosure is described in more detail in the embodiment shown in FIG. 5 on the basis of the technical solution of the embodiment shown in FIG. 4.

In the apparatus 400 of generating the weather forecast information in this embodiment, the weather information acquisition module 401 is specifically used to acquire the weather forecast information for the geographic region concerned by the user.

As shown in FIG. 5, the apparatus 400 of generating the weather forecast information in this embodiment further includes a recommendation information acquisition module 404 used to acquire recommendation information associated with the weather forecast information and attribute information of the user.

Further, the generation module 403 is further used to generate the weather forecast video based on the weather forecast information, the video style and the recommendation information.

Optionally, the recommendation information acquisition module 404 is used to acquire travel prompt information and/or dress advice information from a pre-established information table based on the weather forecast information and the attribute information of the user. The pre-established information table contains the attribute information of the user, the weather forecast information and the associated recommendation information.

Optionally, as shown in FIG. 5, the apparatus 400 of generating the weather forecast information in this embodiment further includes: a collection module 405 used to collect a plurality of attribute information of the user, a plurality of weather forecast information and a plurality of associated recommendation information, from historical log data; and an establishment module 406 used to establish a correspondence relationship of the plurality of attribute information of the user, the plurality of weather forecast information and the plurality of associated recommendation information, and store the correspondence relationship in the information table.

Optionally, the mining module 402 in the apparatus 400 of generating the weather forecast video in this embodiment is used to mine the video style based on the attribute information of the user.

Optionally, the mining module 402 is specifically used to: obtain the video style from the attribute information of the user; mine the video style based on identity information of the user; mine the video style based on age information of the user; mine the video style based on interest information of the user; or mine the video style based on a subject matter of a film and television play concerned by the user in a latest preset time period.

Optionally, the generation module 403 in this embodiment is specifically used to generate the weather forecast video by using a weather forecast video generation model trained based on a deep learning, based on the weather forecast information and the video style.

Accordingly, if the recommendation information may be obtained, the generation module 403 is further used to generate the weather forecast video by using the weather forecast video generation model trained based on the deep learning, based on the weather forecast information, the video style and the recommendation information.

Optionally, as shown in FIG. 5, the apparatus 400 of generating the weather forecast video in this embodiment further includes: pushing module 407 used to push the weather forecast video to the user.

An implementation principle and a technical effect of the apparatus 400 of generating the weather forecast video in this embodiment are the same as those in the related method embodiments, which will not be repeated here.

According to the embodiments of the present disclosure, the present disclosure further provides an electronic device and a readable storage medium.

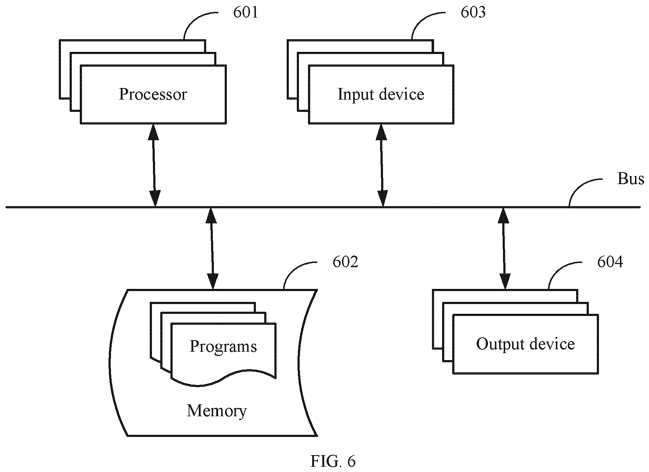

FIG. 6 shows a block diagram of an electronic device for implementing a method of generating a weather forecast video according to the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device may include one or more processors 601, a memory 602, and interface(s) for connecting various components, including high-speed interface(s) and low-speed interface(s). The various components are connected to each other by using different buses, and may be installed on a common motherboard or installed in other manners as required. The processor may process instructions executed in the electronic apparatus, including instructions stored in or on the memory to display graphical information of GUI (Graphical User Interface) on an external input/output device (such as a display device coupled to an interface). In other embodiments, a plurality of processors and/or a plurality of buses may be used with a plurality of memories, if necessary. Similarly, a plurality of electronic apparatuses may be connected in such a manner that each apparatus providing a part of necessary operations (for example, as a server array, a group of blade servers, or a multi-processor system). In FIG. 6, a processor 601 is illustrated by way of example.

The memory 602 is a non-transitory computer-readable storage medium provided by the present disclosure. The memory stores instructions executable by at least one processor, to cause the at least one processor to perform the method of generating the weather forecast video provided in the present disclosure. The non-transitory computer-readable storage medium of the present disclosure stores computer instructions for allowing a computer to execute the method of generating the weather forecast video provided in the present disclosure.

The memory 602, as a non-transitory computer-readable storage medium, may be used to store non-transitory software programs, non-transitory computer-executable programs and modules, such as program instructions/modules corresponding to the method of generating the weather forecast video in the embodiments of the present disclosure. The processor 601 executes various functional applications and data processing of the server by executing the non-transient software programs, instructions and modules stored in the memory 602, thereby implementing the method of generating the weather forecast video in the embodiments of the method mentioned above.

The memory 602 may include a program storage area and a data storage area. The program storage area may store an operating system and an application program required by at least one function. The data storage area may store data etc. generated by using the electronic device according to the method of generating the weather forecast video. In addition, the memory 602 may include a high-speed random access memory, and may further include a non-transitory memory, such as at least one magnetic disk storage device, a flash memory device, or other non-transitory solid-state storage devices. In some embodiments, the memory 602 may optionally include a memory provided remotely with respect to the processor 601, and such remote memory may be connected through a network to the electronic device for the method of generating the weather forecast video. Examples of the above-mentioned network include, but are not limited to the Internet, intranet, local area network, mobile communication network, and combination thereof.

The electronic device for the method of generating the weather forecast video may further include an input device 603 and an output device 604. The processor 601, the memory 602, the input device 603 and the output device 604 may be connected by a bus or in other manners. In FIG. 6, the connection by a bus is illustrated by way of example.

The input device 603 may receive input information of numbers or character, and generate key input signals related to user settings and function control of the electronic device for the method of generating the weather forecast video, such as a touch screen, a keypad, a mouse, a track pad, a touchpad, a pointing stick, one or more mouse buttons, a trackball, a joystick, and so on. The output device 604 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

These computing programs (also referred as programs, software, software applications, or codes) include machine instructions for a programmable processor, and may be implemented using high-level programming languages, object-oriented programming languages, and/or assembly/machine languages. As used herein, the terms "machine-readable medium" and "computer-readable medium" refer to any computer program product, apparatus and/or device (for example, magnetic disk, optical disk, memory, programmable logic device (PLD)) for providing machine instructions and/or data to a programmable processor, including a machine-readable medium for receiving machine instructions as machine-readable signals. The term "machine-readable signal" refers to any signal for providing machine instructions and/or data to a programmable processor.

In order to provide interaction with the user, the systems and technologies described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the protection scope of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of generating a weather forecast video, comprising:
acquiring weather forecast information for a geographic region;
mining a video style; and
generating the weather forecast video based on the weather forecast information and the video style.

2. The method of claim 1, further comprising:
acquiring recommendation information associated with the weather forecast information and attribute information of a user, prior to the generating the weather forecast video based on the weather forecast information and the video style; and
generating the weather forecast video based on the weather forecast information, the video style and the recommendation information.

3. The method of claim 2, wherein the acquiring recommendation information associated with the weather forecast information and the attribute information of the user comprises:
acquiring travel prompt information and/or dress advice information from a pre-established information table based on the weather forecast information and the attribute information of the user, wherein the pre-established information table contains the attribute information of the user, the weather forecast information and the associated recommendation information.

4. The method of claim 3, further comprising: prior to the acquiring travel prompt information and/or dress advice information from a pre-established information table based on the weather forecast information and the attribute information of the user,
collecting a plurality of attribute information of the user, a plurality of weather forecast information and a plurality of associated recommendation information, from historical log data;
establishing a correspondence relationship between the plurality of attribute information of the user, the plurality of weather forecast information and the plurality of associated recommendation information; and
storing the correspondence relationship in the information table.

5. The method of any one of claims 2 to 4, wherein the mining a video style comprises:
mining the video style based on the attribute information of the user.

6. The method of claim 5, wherein the mining the video style based on the attribute information of the user comprises:
obtaining the video style from the attribute information of the user;
mining the video style based on identity information of the user;
mining the video style based on age information of the user;
mining the video style based on interest information of the user; or
mining the video style based on a subject matter of a film and television play concerned by the user in a latest preset time period.

7. The method of any one of claims 1-4 and 6, wherein the generating the weather forecast video based on the weather forecast information and the video style comprises: generating the weather forecast video by using a weather forecast video generation model trained based on a deep learning, based on the weather forecast information and the video style.

8. The method of any one of claims 1-4 and 6, further comprising: subsequent to the generating the weather forecast video based on the weather forecast information and the video style,
pushing the weather forecast video to the user.

9. An apparatus of generating a weather forecast video, comprising:
a weather information acquisition module configured to acquire weather forecast information for a geographic region;
a mining module configured to mine a video style; and
a generation module configured to generate the weather forecast video based on the weather forecast information and the video style.

10. The apparatus of claim 9, further comprising:
a recommendation information acquisition module configured to acquire recommendation information associated with the weather forecast information and attribute information of a user, wherein the generation module is further configured to generate the weather forecast video based on the weather forecast information, the video style and the recommendation information.

11. The apparatus of claim 10, wherein the recommendation information acquisition module is further configured to:
acquire travel prompt information and/or dress advice information from a pre-established information table based on the weather forecast information and the attribute information of the user, wherein the pre-established information table contains the attribute information of the user, the weather forecast information and the associated recommendation information.

12. The apparatus of claim 11, further comprising:
a collection module configured to collect a plurality of attribute information of the user, a plurality of weather forecast information and a plurality of associated recommendation information, from historical log data; and
an establishment module configured to establish a correspondence relationship between the plurality of attribute information of the user, the plurality of weather forecast information and the plurality of associated recommendation information, and store the correspondence relationship in the information table.

13. The apparatus of any one of claims 10 to 12, wherein the mining module is further configured to mine the video style based on the attribute information of the user.

14. The apparatus of claim 13, wherein the mining module is further configured to:
obtain the video style from the attribute information of the user;
mine the video style based on identity information of the user;
mine the video style based on age information of the user;
mine the video style based on interest information of the user; or
mine the video style based on a subject matter of a film and television play concerned by the user in a latest preset time period.

15. The apparatus of any one of claims 9-12 and 14, wherein the generation module is further configured to generate the weather forecast video by using a weather forecast video generation model trained based on a deep learning, based on the weather forecast information and the video style.

16. The apparatus of any one of claims 9-12 and 14, further comprising:
a pushing module configured to push the weather forecast video to the user.

17. An electronic device, comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 8.

18. A non-transitory computer-readable storage medium having computer instructions stored thereon, wherein the computer instructions allows a computer to implement the method of any one of claims 1 to 8.
